# EUROPÄISCHE PATENTSCHRIFT

(11) **EP 3 765 320 B1**
(45) Veröffentlichungstag und Bekanntmachung des Hinweises auf die Patenterteilung: **28.02.2024**
(21) Anmeldenummer: 19715001.4
(22) Anmeldetag: 14.03.2019
(51) Int. Cl.: B60H 1/24, B60H 1/00, B60N 2/56

(54) **BELÜFTUNGSVORRICHTUNG FÜR EINEN INNENBEREICH EINES KRAFTFAHRZEUGS**
VENTILATION DEVICE FOR THE INSIDE OF A MOTOR VEHICLE
DISPOSITIF DE VENTILATION POUR UNE ZONE INTÉRIEURE D'UN VÉHICULE AUTOMOBILE

(30) Priorität: 16.03.2018 DE 102018106156
(43) Veröffentlichungstag der Anmeldung: 20.01.2021
(73) Patentinhaber: VOLKSWAGEN AG, 38440 Wolfsburg (DE)
(72) Erfinder: ENKE, Lukas, 38440 Wolfsburg (DE); BUDER, Ricardo, 01127 Dresden (DE); MICHEL, Timo, 96365 Nordhalben (DE); UHLENBUSCH, Olaf, 96275 Marktzeuln (DE)
(74) Vertreter: Gulde & Partner
(86) Internationale Anmeldenummer: PCT/EP2019/056373
(87) Internationale Veröffentlichungsnummer: WO 2019/175294

(56) Entgegenhaltungen:
- DE-A1-102015 112 898
- FR-A1- 2 845 318
- JP-A- H 106 745
- JP-A- 2017 030 684

## Beschreibung

Die Erfindung betrifft eine Belüftungsvorrichtung für einen Innenbereich eines Kraftfahrzeugs, insbesondere in einem Bereich einer zweiten Sitzreihe. Viele der heutigen bereits bekannten Klimatisierungsfunktionen stehen häufig nur den vorderen Sitzreihen zur Verfügung. Zum Beispiel sind zu diesem Zwecke Ausströmer mit Spot-Diffus-Funktion beziehungsweise zugfreier Belüftung und vollwertige Klimabedienteile zur Steuerung der Klimafunktion bekannt. Wenn für andere Bereiche in dem Innenbereich eines Kraftfahrzeuges Ausströmer vorgesehen sind, beispielsweise in Form von Fonds-Ausströmer, so ist die Größe, die Funktionen und die Position häufig zudem durch die Bauraumrestriktionen in der zweiten Sitzreihe stark eingeschränkt. So hat sich mittlerweile eine Entwicklung eingestellt, welche für den Fondbereich vollwertige Klimabedienteile, beispielsweise in Oberklassen-Fahrzeugen, mit Ausströmern in der B-Säule oder zugfreie Belüftung im Dachhimmel vorsehen. Diese Lösungen können dabei zusätzlich zu den Lösungen in einer Mittelkonsole vorgesehen sein. Zur Unterstützung für eine Klimatisierung sind auch Sitzheizungen, Sitzlüftungen oder Nackenheizungen bereits als bekannt anzusehen. Dabei ist die Erreichbarkeit der Insassen mittels B-Säulen-Ausströmern nur begrenzt und häufig nur asymmetrisch möglich. Zudem ist der Bauraum für zusätzliche Ausströmerfunktionen, beispielsweise diffuse oder zugfreie Führung der Luftströme, in diesem Bereich nicht unmittelbar vorhanden. Dies liegt unter anderem an der Position der Vordersitze beziehungsweise der Vordersitze allein sowie einem geringen Platz in der Mittelkonsole. Zudem ist häufig der Bauraum im Dach aufgrund eines vorhandenen Glasdaches begrenzt. Auch ist die Erreichbarkeit von Oberkörpern über Ausströmer in der Mittelkonsole nur begrenzt gewährleistet. So wurden in letzter Zeit vermehrt Lösungen vorgestellt, welche die zugfreie Belüftung im Dachhimmel in den Fokus der technischen Neuerungen stellen.

So wird in der Druckschrift DE 101 10 191 ein Fahrzeugdach mit einem Deckel zum Verschließen einer Dachöffnung offenbart, welches mindestens einen Luftführungskanal umfasst, um einen Luftstrom auf die Scheibe zu leiten. Auch ist zumindest ein Mittel zum Leiten wenigstens eines Teils des Luftstroms in Richtung eines Fahrzeuginsassen vorgesehen. Somit zeigt diese Lösung jeweils Möglichkeiten, eine direkte Luftführung bereitzustellen, so dass ein jeweiliges gewünschtes Ergebnis erreicht werden kann. Eine indirekte Luftführung der Luftströme ist nicht vorgesehen.

In der DE 102 42 805 wird eine Belüftungseinrichtung für ein Kraftfahrzeug offenbart. Dabei ist ein Luftausströmer im Dachhimmel des Kraftfahrzeugs vorgesehen. Der Luftausströmer ist sichtbar im vorderen Ende eines Dachquerträgers angeordnet, wobei eine Dachquerträgerstruktur einschließlich des Dachquerträgers oder Teile derselben als Luftkanal dient. Die Belüftungseinrichtung dient zum indirekten und gleichförmigen Belüften des Fahrgastraums. Eine bewusste Trennung zwischen mindestens zwei Belüftungszuständen im Innenbereich ist nicht vorgesehen. Auch ist eine Unterscheidung zwischen einer direkten und einer indirekten Richtung von ausströmender Luft nicht vorgesehen.

In der DE 10 2014 222 139 wird ein Kraftfahrzeug offenbart. Dabei soll eine Kühlung des Innenraums beziehungsweise der im Kraftfahrzeug befindlichen Personen mittels ausströmender Luft erfolgen, wobei an gegenüberliegenden Dachrahmenlängsabschnitten jeweils entsprechend der Anzahl an Sitzreihen Luftausströmungsöffnungen beidseitig vorgesehen sind. Ferner sind Mittel vorgesehen, welche eine Platzbelegung auf den vorhandenen Sitzen durch eine Person erkennen. Über eine Regelung kann so dann eine auf einem Sitz befindliche Person mit einem Luftmengenstrom angeströmt werden. Insbesondere ist dabei vorgesehen, dass eine indirekte Anströmung aus zwei sich aufeinander zu bewegenden Luftströmen resultiert. Je nach dem, wie diese beiden Luftströme über Drosselklappen und Luftförderanlagen gelenkt werden, kann ein gewünschtes Ergebnis erzielt werden.

Die DE 10 2015 112 898 zeigt ein Klimatisierungs-und Belüftungssystem für ein Kraftfahrzeug. Dabei ist zumindest ein Fahrzeugsitz mittels eines Dachausströmersystems mit mindestens einem Dachausströmer vorgesehen. Dabei weist der Dachausströmer Mittel auf, welche eine Segmentierung der aktiven Ausströmflächen erlauben. In jedem Segment wirkt dabei eine vertikal in den Fahrzeuginnenraum wirkende Luftzufuhr mit einer Auswahl von Klimazonen. Ein großflächiger Dachausströmer weist eine Reihe von Öffnungen auf, welche je nach gewählter Segmentierung und entsprechender Klimazone einen Öffnungszustand einnehmen. Auch wird eine parallel zur Fahrtrichtung einzuteilende Segmentierung vorgeschlagen. Auch wird eine Beleuchtung vorgeschlagen, welche in Abhängigkeit der eingestellten Segmentierung geschaltet wird. Zusammen können aber der Dachausströmer und die Öffnungen eine in der jeweiligen Ausführungsvariante voreingestellte Richtung von vertikal beziehungsweise parallel zur Fahrtrichtung nicht ändern. Eine ungerichtete vertikale Luftzufuhr in den Fahrgastinnenraum wird lediglich aufgrund einer geringen bereitgestellten Luftmenge realisiert. Eine Veränderung der vertikalen Richtung in eine beispielsweise entlang des Dachhimmels verlaufende Strömung ist nicht vorgesehen. In diesem Zusammenhang kann auch die Beleuchtung einen solchen Zustand also nicht anzeigen.

Aus der Druckschrift JP 2017 030 684 A ist ein Klimaanlagenregister für eine Decke als bekannt zu entnehmen. Dieser Gegenstand verhindert, dass ein Passagier ein Druckgefühl durch ein Luftführungselement empfängt, welches ausgelegt ist, Luft von einem dafür vorgesehenen Luftauslass in einem Kabinendeckenteil eines Fahrzeugs zu einer Innenseite der Kabine des Fahrzeugs zu führen. Dabei umfasst das Luftführungselement eine Luftführungsplatte, ein Wellenteil und noch ein Wellenteil. Die Luftführungsplatte und die Wellenteile sind in einem Kanal angeordnet. Der Verformungsbetrag der Luftführungsplatte wird durch Relativbewegung der Wellenteile geändert, um Förderwege der von einer Öffnung gelieferten Luft zu ändern. Die Luftführungsplatte ist keiner Seite der Kabine ausgesetzt, da eine Windrichtung innerhalb des Kanals eingestellt ist, der sich an der Rückseite der Öffnung befindet. Somit kann ein Druckgefühl für einen Passagier unterdrückt werden.

Aus der Druckschrift JP H10 6745 A ist eine Klimaanlage als bekannt zu entnehmen. Dabei soll eine Reduzierung eines Geräusches durch Reduzierung eines Hochfrequenzgeräuschs, das in einem in einer Versorgungsöffnung installierten Lamellengitter erzeugt wird, bewirkt werden, ohne dabei die Anzahl der Teile und die Produktkosten zu erhöhen. Als Lösung wird vorgeschlagen, einen Lüftungskanal eines peripheren Teils der Versorgungsöffnung bereitzustellen, der am oberen Ende eines dachseitigen Kanals installiert ist, und diesen zu vergrößern, um eine Versorgungsöffnung einzuschließen, in welcher ein Luftstrom zum Kopf eines Insassen hin geblasen wird, welcher auf einem hinteren Sitz von einem Fahrzeug sitzt. Dadurch wird eine Windgeschwindigkeitsverteilung von kalter Luft, die durch ein Lamellengitter strömt, stabilisiert, und somit ist jedes mögliche Hochfrequenzgeräusch, das in diesem Lamellengitter erzeugt werden kann, reduzierbar.

Aus der Druckschrift FR 2 845 318 A1 ist zudem eine Wärmeregulierungsvorrichtung für einen Kraftfahrzeugfahrraum als bekannt zu entnehmen. Solch eine Wärmeregulierungsvorrichtung umfasst dabei Lüftungs-, Heizungs- und Klimaanlagen und einen Sitz oder eine Sitzreihe. Es gibt eine zusätzliche Lüftungs-, Heizungs- und Klimaanlage, die mit dem Sitz zusammenarbeitet, um die heiße oder kalte Luft durch den Sitz in Richtung einer Abteilzone zu treiben, in der ein Insasse untergebracht ist.

Der Erfindung liegt nun die Aufgabe zugrunde, eine Belüftungsvorrichtung für einen Innenbereich eines Kraftfahrzeugs bereitzustellen, welche über einen hohen Komfort aufgrund einer flexiblen Einstellung von Luftströmen verfügt, welche für Insassen intuitiv erkennbar ist.

Erfindungsgemäß ist vorgesehen, dass eine Belüftungsvorrichtung für einen Innenbereich eines Kraftfahrzeugs, insbesondere in einem Bereich einer zweiten Sitzreihe, bereitgestellt wird. Diese Belüftungsvorrichtung umfasst wenigstens ein Luftkanalelement, wenigstens eine mit einem ersten Ende des wenigstens einen Luftkanalelements gekoppelte Versorgungsvorrichtung als Teil einer Klimaanlage des Kraftfahrzeugs, wenigstens ein Luftausströmelement, welches an einem zweiten Ende des wenigstens einen Luftkanalelements gekoppelt ist und ausgelegt ist, im nicht sichtbaren Bereich des Innenbereichs des Kraftfahrzeugs angeordnet zu werden , wenigstens ein Richtelement und wenigstens ein Lichtelement. Die Anordnungen des wenigstens einen Richtelements und des wenigstens einen Luftausströmelements sind dabei ausgelegt, zusammen zu bewirken, dass die Belüftungsvorrichtung zumindest zwischen zwei Belüftungszuständen in dem Innenbereich des Kraftfahrzeugs stufenlos einstellbar ist, welche sich zumindest jeweils durch eine direkt in den Innenraum des Kraftfahrzeugs gerichtete und eine indirekt entlang eines für diese Zwecke ausgebildeten Dachhimmels gerichtete Richtung von ausströmender Luft bezogen auf einen Sitzbereich des Kraftfahrzeugs unterscheiden. Auf diese Weise ist es möglich, einen hohen Komfort aufgrund einer flexiblen Einstellung von Luftströmen, welche für Insassen intuitiv erkennbar ist, zu realisieren. Insbesondere ist eine Gestaltung des Luftauslasses in der Art möglich, dass die eigentliche Belüftungsfunktion im Deckenbereich nicht sichtbar ist. Somit stellt sich ein hoher Komfort aufgrund eines uneingeschränkten Innenraums ein. Beispielsweise kann der Mittelkonsolen-Ausströmer wegfallen, so dass der frei gewordene Bauraum anderweitig genutzt werden kann. Der Bauraum kann für neue Funktionen, beispielsweise Ablagen, genutzt werden. Es sind mittels der Erfindung Belüftungskonzepte für vollwertige Klimafunktionen in der zweiten Sitzreihe möglich. Auch ist eine ganzheitliche komfortbasierte Klimaregelung möglich. Dabei ist die Erfassung des thermischen Insassenkomforts und eine automatisierte Regelung aller Klimatisierungssysteme möglich. Dabei kann die Klimaanlage, da sie über die Versorgungsvorrichtung mit der Belüftungsvorrichtung gekoppelt ist, dazu verwendet werden, eine gewünschte Steuerung beziehungsweise Programmierung der Belüftungsvorrichtung auszuüben. Jegliche dabei in der Klimaanlage des Kraftfahrzeuges vorhandenen beziehungsweise mit dieser gekoppelten Module können somit in Interaktion mit der Belüftungsvorrichtung stehen. Zum Beispiel kann eine Sensorik zur Bewertung des thermischen Insassenkomforts vorgesehen sein. Dies kann beispielsweise in der Form einer Kombination von Feuchte und Temperatursensorik im Sitz und einer Infrarot-Sensorik für Gesichtshauttemperatur vorgesehen sein. Beispielsweise ist somit eine neue Klima-Architektur im Fond möglich, etwa durch eine Deckenbelüftung und Backpanel-Ausströmer mit programmierbaren Belüftungsstilen. Die Innenraum-Klimatisierung kann somit individuell auf die thermischen Komfortzustände der Insassen abgestimmt werden. Es lässt sich also eine komfortorientierte und prädiktive Klimaautomatik bereitstellen. Dabei kann die indirekte Belüftung durch eine Strömung entlang der Deckenlinie realisiert werden. Die Gestaltung des Dachhimmels kann beispielsweise in der Art sein, so dass sich ein Coanda-Effekt, also ein Anliegen der Luftströmung an der Deckenlinie, einstellt. Es wird also eine Strömung derart an der Deckenlinie angelegt, so dass sich diese im Raum verteilt und ein direktes Anströmen der Insassen vermieden wird. Es stellt sich eine indirekte beziehungsweise zugfreie Belüftungsfunktion für den Fahrzeugfond ein. Dabei ist beispielsweise eine Integration wenigstens einiger der vorgestellten Elemente in den seitlichen Deckenbereich vorgesehen, um Luft entlang der Deckenlinie von außen nach innen in den Innenraum des Kraftfahrzeuges zu fördern. Die Integration des wenigstens einen Luftkanalelements kann beispielsweise in den hinteren Dachbereich des Fahrzeuges, zum Beispiel über die B- oder C-Säule, vollzogen werden. Dabei kann die Gestaltung des Luftauslasses in Form des Luftausströmelements in der Art sein, dass eine eigentliche Belüftungsfunktion im Deckenbereich nicht sichtbar ist. Die technische Umsetzung kann bei einer stufenlosen Umschaltung derart sein, dass beispielsweise nur der Innenraum beziehungsweise nur eine Scheibe mit Luft beaufschlagt wird, als auch derart sein, dass beide, sowohl Innenraum als auch Scheibe beziehungsweise Insassen mit Luft beaufschlagt werden. Derartige Übergänge sind einstellbar. Das Richtelement ist beispielsweise im Deckenbereich derart angeordnet, so dass ein Strömungsbild des Luftausströmelements gezielt beeinflusst wird. Beispielsweise kann der Ort des Ablösens der Luftströmung gezielt beeinflusst werden. Somit lassen sich unterschiedliche Belüftungsfunktionen mit einem Ausströmkonzept realisieren. Zum Beispiel kann eine Schaltbarkeit zwischen Defog-/ Defrostfunktion und Belüftung des Innenraums realisiert werden. Wahlweise kann eine Umschaltbarkeit der Strömungsrichtung zwischen Innenraum und Seitenscheibe beziehungsweise gleichzeitiges Ausströmen der Luft Richtung Scheibe und Dachhimmel realisiert werden, um beispielsweise einen Eintrag der seitlichen Sonneneinstrahlung zu vermindern.

Erfindungsgemäß ist vorgesehen, dass das wenigstens eine Richtelement ausgelegt ist, in einem nicht sichtbaren Dachbereich des Innenraums des Kraftfahrzeugs angeordnet zu werden, wobei das wenigstens eine Richtelement ausgelegt ist, bei einer Aktivierung des wenigstens einen Richtelements, eine Formveränderung des benachbarten sichtbaren Dachbereichs zu bewirken, so dass eine Richtung von ausströmender Luft aus dem wenigstens einen Luftausströmelement von einem Belüftungszustand zu einem weiteren Belüftungszustand einstellbar ist. Somit kann ein besonderer Komfort erzielt werden. Der Innenraum kann weitestgehend von den Insassen genutzt werden, da somit ein platzsparendes und kostengünstiges Konzept realisierbar ist.

Die Erfindung kann beispielsweise in allen Fahrzeugen mit Sitzen im Fonds eingesetzt werden. Beispielsweise für Fahrzeuge der Mittel- und Oberklasse, welche ausreichend Raum für die Integration von Luftkanälen beziehungsweise Funktionsflächen ermöglichen. Auch kann die Erfindung in Bussen oder Kleinbussen verwendet werden. Denkbar wäre auch der Einsatz in Flugzeugen, Personenzügen und Traktoren.

Weitere bevorzugte Ausgestaltungen der Erfindung ergeben sich aus den übrigen, in den Unteransprüchen genannten Merkmalen.

In weiterer bevorzugter Ausgestaltung der Erfindung ist vorgesehen, dass in Abhängigkeit der zumindest zwei Belüftungszuständen eine Lichtinszenierung mittels des wenigstens einen Lichtelements einstellbar ist. Auf diese Weise kann ein entsprechender Belüftungszustand auch visuell den Insassen angezeigt werden. Das Lichtelement kann beispielsweise ein Lichtleiter oder ein Lichtsystem für die Inszenierung beziehungsweise die Anzeige der Belüftungsfunktion sein.

In weiterer bevorzugter Ausgestaltung der Erfindung ist vorgesehen, dass das wenigstens eine Luftkanalelement und das wenigstens eine Luftausströmelement und das wenigstens eine Richtelement ausgelegt sind, in einem Dachbereich eines Innenbereichs des Kraftfahrzeugs angeordnet zu werden . Auf diese Weise ist eine besonders gute flexible Einstellung möglich, so dass ein besonders hoher Komfort erreicht werden kann.

Auch ist in einer weiteren bevorzugten Ausgestaltung der Erfindung vorgesehen, dass das wenigstens eine Richtelement manuell oder elektrisch verstellbar ist, wobei im Falle einer elektrischen Verstellbarkeit die Belüftungsvorrichtung mit einer programmierbaren Klimaanlage derart gekoppelt ist, so dass die zumindest zwei Belüftungszustände und die Lichtinszenierung in Abhängigkeit eines aktivierten Programmes der Klimaanlage einstellbar sind. Auf diese Weise ist eine besonders gute flexible Einstellung möglich, so dass ein besonders hoher Komfort erreicht werden kann. Insbesondere kann auch erreicht werden, dass Insassen aufgrund der Lichtinszenierung intuitiv den jeweiligen Belüftungszustand erkennen können.

Ferner ist in einer weiteren bevorzugten Ausgestaltung der Erfindung vorgesehen, dass die Versorgungsvorrichtung in Form eines Front/- Mittelkonsolen-Klimageräts oder in Form eines Heck-Klimageräts mit dem wenigstens einen Luftkanalelement gekoppelt ist. Auf diese Weise kann sich nicht nur ein hoher Komfort aufgrund einer flexiblen Einstellung von Luftströmen erreicht werden, sondern zugleich kann der Innenraum sehr effizient genutzt werden, da somit ein platzsparendes und kostengünstiges Konzept realisierbar ist.

Schlussendlich ist in einer weiteren bevorzugten Ausgestaltung vorgesehen, dass ein Kraftfahrzeug mit einer Belüftungsvorrichtung nach einem der Ansprüche 1 - 5 bereitgestellt wird. In einem solchen Kraftfahrzeug lässt sich ein hoher Komfort aufgrund einer flexiblen Einstellung von Luftströmen erreichen, welche für Insassen intuitiv erkennbar ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert, wobei die Figuren 1 bis 7 die grundsätzliche Funktionsweise von gattungsgemäßen Belüftungsvorrichtungen und Figur 8 eine erfindungsgemäße Belüftungsvorrichtung zeigen. Es zeigen:
- Figur 1: eine Belüftungsvorrichtung in einem eingebauten Zustand;
- Figur 2: eine schematische Schnittansicht einer Belüftungsvorrichtung;
- Figur 3: ein Luftausströmelement mit einem angeordneten Richtelement in einem Sitzelement;
- Figur 4: eine Belüftungsvorrichtung im eingebauten Zustand;
- Figur 5a: eine Schnittansicht eines Luftausströmelements mit einem angeordneten Richtelement;
- Figur 5b: ein Richtelement in einem eingebauten Zustand;
- Figur 6a: eine Schnittansicht eines Richtelements in einem eingebauten Zustand;
- Figur 6b: ein Richtelement in einem eingebauten Zustand;
- Figur 6c: ein Richtelement in einem eingebauten Zustand;
- Figur 7a: eine Schnittansicht eines Richtelements in einem eingebauten Zustand;
- Figur 7b: ein Richtelement in einem eingebauten Zustand;
- Figur 8: eine schematische Draufsicht auf eine Belüftungsvorrichtung.

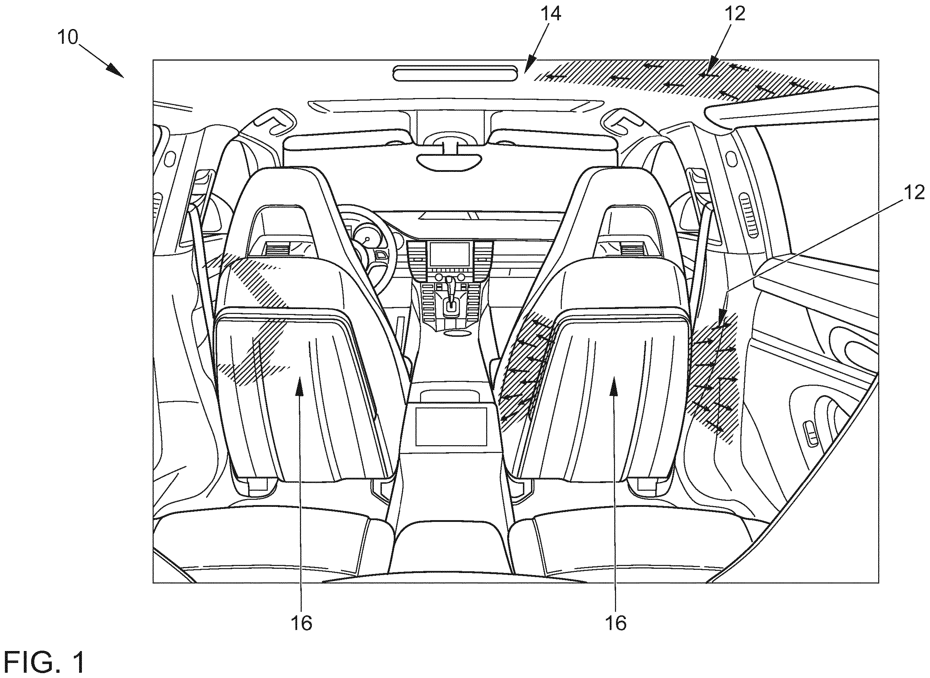

Figur 1 zeigt eine Belüftungsvorrichtung 10 in einem eingebauten Zustand in einem Innenbereich eines Kraftfahrzeugs. In der gezeigten Einstellungen zeigen Strömungspfeile 12 den Verlauf von ausströmender Luft aus der Belüftungsvorrichtung 10. In diesem Ausführungsbeispiel der Figur 1 sind die einzelnen Bestandteile der Belüftungsvorrichtung 10 sowohl in einem Dachbereich 14 des Innenbereichs als auch in einer jeweiligen Rückseite von Sitzelementen 16 im nicht sichtbaren Bereich angeordnet. Dabei ist die ausströmende Luft in einem Belüftungszustand, welcher jeweils eine indirekte Richtung der ausströmenden Luft vorsieht. Dabei sind die Strömungspfeile 12 nur beispielhaft dargestellt und zeigen lediglich einen von verschiedenen möglichen Verläufen einer sich einstellenden Richtung beziehungsweise eines zumindest teilweisen Verlaufs der ausströmenden Luft. Insbesondere die Strömungspfeile 12 an den Sitzelementen können auch zumindest teilweise in Richtung des Dachbereichs 14 zeigen, so dass sich ausströmende Luft ausgehend von den Sitzelementen auch entlang des Dachbereichs 14 ausbreiten könnte. Eine derartige Luftströmung würde sich also ausgehend von den Sitzelementen bis zu dem Dachbereich 14 ausbreiten und dort in verschiedene Richtungen abgelenkt werden, so dass sich eine indirekte Luftströmung einstellt. So kann sich beispielsweise auch eine Luftströmung entlang des Dachbereichs 14 einstellen. Der Dachbereich 14 bezieht alle Bereiche ein, welche sich oberhalb eines Innenbereichs eines Kraftfahrzeugs befinden. Insbesondere ist dies ein Bereich zwischen zwei sich gegenüberliegenden seitlichen Fensterscheiben. Je nach bevorzugter Richtung einer eingebauten Belüftungsvorrichtung 10 und im Zusammenspiel mit den einzelnen zuvor genannten Komponenten kann der Dachbereich 14 entsprechend für diese Zwecke ausgebildet sein, um beispielsweise auch eine indirekte Richtung der ausströmenden Luft vorzugeben.

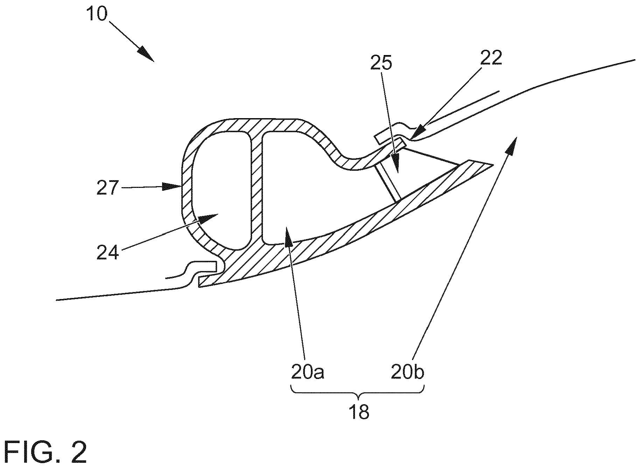

Figur 2 zeigt eine schematische Schnittansicht einer Belüftungsvorrichtung 10. Diese Ansicht umfasst dabei ein Luftkanalelement 18, welches in diesem Beispiel zwei Luftkanäle 20a und 20b umfasst. Dabei werden in der Figur 2 jeweils nur die beispielhaften Positionierungen dieser Luftkanäle 20a und 20b gezeigt. Des Weiteren ist ein Luftausströmungspunkt 22 zu erkennen. Der Luftausströmungspunkt 22 ist Teil eines Luftausströmelements 24, welches in dieser Figur 2 nur beispielhaft gezeigt wird. Ein solches Luftausströmelement 24 könnte auch als Blade-Ausströmer bezeichnet werden. Es ist vorstellbar, dass das Luftausströmelement 24 eine andere als die in Figur 2 gezeigte Form aufweist. Auch die Anordnung der Luftkanäle 20a, 20b und des Luftausströmelements 24 sind hier nur beispielhaft dargestellt. Ein Richtelement 25 ist in diesem Ausführungsbeispiel ebenfalls zu erkennen. Dabei kann ein solches Richtelement 25, wie dargestellt, zumindest teilweise in die Struktur des Luftausströmelements 24 derart integriert sein, dass Bestandteile sich beispielsweise auch stofflich an dieses oder andere Bauteile anschließen. Dies ist bis zu einem Freiheitsgrad derart denkbar, so dass zumindest ein Bestandteil des Richtelements 25 separat verstellbar verbleibt. Zu erkennen ist in Figur 2 insbesondere, inwiefern das Luftausströmungselement 24 und das Richtelement 25 zusammenwirken, so dass eine Luftströmung, welche sich an dem Luftausströmungspunkt 22 von einem nicht sichtbaren Bereich der Belüftungsvorrichtung 10 in Richtung eines sichtbaren Bereichs der Belüftungsvorrichtung 10 bewegt, gelenkt wird. Somit lassen sich je nach Position des Richtelements 25 unterschiedliche Belüftungszustände realisieren. Jegliche andere Kombination hinsichtlich einer räumlichen Anordnung dieser Bestandteile der Belüftungsvorrichtung 10 ist an dieser Stelle denkbar, solange dabei gewährleistet bleibt, dass zumindest zwei Belüftungszustände, nämlich eine indirekte und eine direkte Luftführung, ermöglicht wird. Die Anzahl der Luftkanäle in dem Luftkanalelement 18 ist nicht sonderlich beschränkt. Ebenso wäre es denkbar, dass das Luftkanalelement 18 aus nur einem Luftkanal 20 ausgebildet ist, welches dann entsprechend alle vorgesehenen Luftausströmungspunkte 22 einer Belüftungsvorrichtung 10 mit Luft versorgt. Der Luftkanal 20a ist im sichtbaren Bereich des seitlichen Dachbereichs 14 vorgesehen. Ein Außenbereich 27 des Luftausströmelements 24 könnte dabei derart gestaltet sein, dass dieser Außenbereich 27 sich sinngemäß in die Optik des Dachbereiches 14 eingliedert beziehungsweise optisch nicht von diesem zu unterscheiden ist. Der Luftkanal 20b ist in der Figur 2 außerhalb des Sichtbereiches angeordnet und lediglich mittels der denkbaren Positionierung dargestellt. Zum Beispiel könnte solch ein Luftkanal 20b auch Bestandteil von einem anderen Bauteil der Fahrzeugkarossiere sein. Auch könnte solch ein Luftkanal 20b ein separates Bauteil in der Form eines Rohres, eines röhrenförmigen Gegenstandes oder sonst eines geometrischen Gebildes sein, welches ausgebildet ist, Luft zu einem vorgesehenen Luftausströmungspunkt 22 zu leiten. Eine nicht gezeigte Lichtinszenierung könnte beispielsweise mittels Lichtelementen in Form von Lichtleitern vorgesehen sein. Das Ausführungsbeispiel von Figur 2 ist vorzugweise für den Einsatz im Dachbereich 14 vorgesehen. Ein direktes Ziel ist es dabei, eine indirekte Belüftung durch Strömung entlang einer Deckenlinie in einem ausgewählten Belüftungszustand der Belüftungsvorrichtung 10 zu ermöglichen.

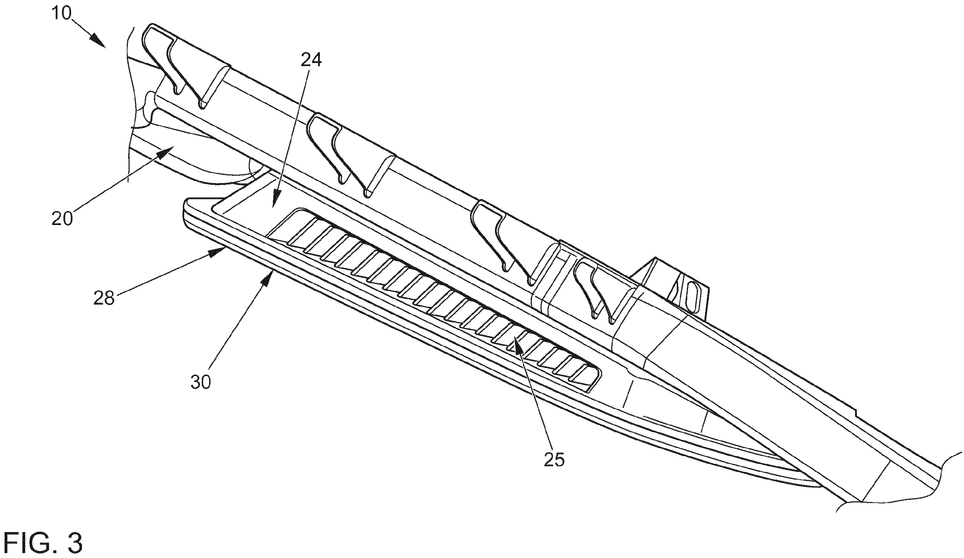

In Figur 3 wird ein Luftausströmelement 24 mit einem angeordneten Richtelement 25 in einem Sitzelement 16 gezeigt. Das Richtelement 25 ist hier in Form von Lamellen , welche beweglich gelagert sein können, gezeigt. Die Lamellen können aufgrund ihrer Positionierungen beziehungsweise ihrer Einstellungen für eine gleichmäßige Luftverteilung entlang der Deckenlinie sorgen. Dabei kann beispielsweise eine elektrische Richtbarkeit mittels einer elektrischen Vorrichtung in Form eines Elektromotors realisiert werden, um somit verschiedene Belüftungsstile zu ermöglichen. Das Luftausströmelement 24 ist mit einem Luftkanal 20 gekoppelt, welches wiederum Bestandteil eines Luftkanalelements 18 ist. Die Versorgung des Luftkanals 20 mit Luft kann bezogen auf die Bildebene entweder von links mittels einer nicht gezeigten Versorgungsvorrichtung in Form eines Heck-Klimageräts vollzogen werden oder von rechts mittels einer nicht gezeigten Versorgungsvorrichtung in Form eines Front/ Mittelkonsolen-Klimageräts. Zudem wird in Figur 3 eine Blende 28 gezeigt, welche als Trennelement zwischen dem Luftausströmelement 24 mit dem angeordneten Richtelement 25 und einem sichtbaren Bereich des Sitzelements 16 angeordnet ist. Mit anderen Worten begrenzt diese Blende 28 das Luftausströmelement 24 mit dem angeordneten Richtelement 25 derart, dass ein Betrachter die Belüftungsvorrichtung 10 lediglich aufgrund der Wirkung in Form von bereitgestellter Luft wahrnimmt und nicht visuell als ein separates Bauteil, welches sich direkt von den übrigen Bauteilen des Sitzelements 16 optisch hervorhebt. Die Blende 28 kann zudem ein Lichtelement 30 in Form eines Lichtleiters umfassen, so dass eine Inszenierung mit Licht von der jeweilig gewählten Belüftungsfunktion möglich ist. Mittels der in Figur 3 gezeigten beispielhaften Ausführungsform könnte somit eine Einkopplung von Luft in eine Sitzstruktur ermöglicht werden, wobei diese dann mit einer Lichtinszenierung begleitet werden könnte, wenn ein Benutzer diese Funktion zusätzlich ausgewählt hat. Es ist somit eine Integration in ein Backpanel möglich. Vorstellbar ist es auch, dass eine Lichtinszenierung bewusst ein- und ausgeschaltet werden kann beziehungsweise in einem funktionalen Zusammenhang mit einem jeweils gewählten Programm einer Klimaanlage steht.

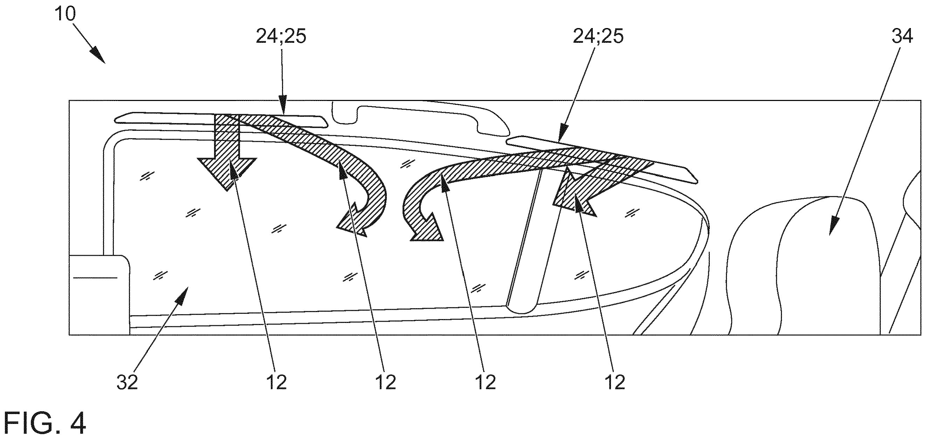

Figur 4 zeigt eine Belüftungsvorrichtung 10 im eingebauten Zustand. Zu erkennen ist eine Fensterscheibe 32 in einem Fond von einem Kraftfahrzeug sowie ein Kopfstützbereich 34 einer Sitzstruktur im Fond von diesem Kraftfahrzeug. Die Belüftungsvorrichtung 10 umfasst hier beispielsweise zwei gezeigte Luftausströmelemente 24 mit jeweiligen nicht im Detail gezeigten Richtelementen 25. In diesem Beispiel sind die Luftausströmelemente 24 mit jeweiligen nicht im Detail gezeigten Richtelementen 25 im sichtbaren Bereich derart angeordnet, so dass sie sich deutlich von dem übrigen Dachbereich 14 optisch hervorheben. Die gezeigten Strömungspfeile 12 zeigen dabei sowohl einen möglichen direkten als auch einen indirekten Belüftungszustand an. Denkbar wäre, dass bei einem oder beiden der mindestens zwei einstellbaren Belüftungszuständen auch zumindest ein Teilbereich der Fensterscheibe 32 derart mit Luft beaufschlagt wird, so dass sich hier ein gewünschter Effekt, beispielsweise eine freie Sicht nach außen, einstellt. Somit ist es zum Beispiel auch möglich, eine indirekte Belüftung von hinten und aus nicht gezeigten Dachholmen zu realisieren.

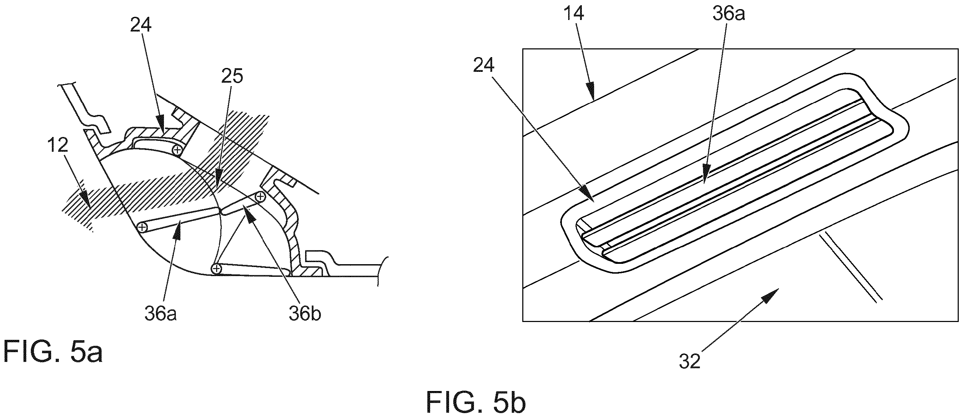

Die Figur 5a zeigt als Bestandteile einer Belüftungsvorrichtung 10 eine Schnittansicht eines Luftausströmelements 24 mit einem angeordneten Richtelement 25, wobei das Richtelement 25 in Form von Lamellen ausgebildet ist. Dabei sind die Lamellen in Lamellen 36a im sichtbaren Bereich und Lamellen 36b im nicht sichtbaren Bereich unterteilt. Im sichtbaren Bereich sind zwei Lamellen 36a zu erkennen und im nicht sichtbaren Bereich sind ebenfalls zwei Lamellen 36b zu erkennen. Insgesamt sind also vier Lamellen vorgesehen. Die Anzahl der Lamellen kann sich in einer nicht dargestellten Variante unterscheiden und jede dabei vorteilhafte Anzahl von Lamellen aufweisen. Auch die Form der Lamellen ist in dieser Figur nur als beispielhaft aufzufassen und es sind auch jegliche andere Formen von Lamellen denkbar, so lange sich somit eine gewünschte Richtung einer Luftströmung einstellen lässt. Die Lamellen 36b sind also im Hintergrund des Luftausströmelements 24 angeordnet. In der gezeigten Figur ist dabei eine dieser Lamellen 36b derart verstellt, so dass sie in einer Wandung von dem Luftausströmelement 24, welche zumindest teilweise der Luftströmung ausgesetzt ist, zumindest teilweise oder gänzlich verschwindet und mit der Wandung von dem Luftausströmelement 24 zusammen einen gewünschten Effekt auf die ausströmende Luft aufweist. Die Form der Wandung von dem Luftausströmelement 24 kann dementsprechend an eine Form der Lamellen angepasst sein, so dass das Zusammenwirken letztendlich den gewünschten Effekt auf die ausströmende Luft zumindest teilweise bereitstellt. Mit anderen Worten kann zumindest eine Lamelle 36b derart verstellt werden, so dass sie eine Verlängerung einer Außenlinie der Wandung darstellt beziehungsweise zusammen mit der Wandung, in welcher sie befestig ist, ein gemeinsame Auswirkung auf eine ausströmende Luft aufweist. Eine derartige Lamelle 36b kann beispielsweise mit einem Scharnier oder einer Schraube oder sonst einem Befestigungsmittel in der Wandung drehbar befestigt sein. Die Wandung beziehungsweise generell das Luftausströmelement 24 kann dabei eine Aussparung aufweisen, in welcher die Lamelle 36b in einem einklappbaren Zustand zumindest teilweise formschlüssig anliegen kann. Die gegenüberliegende Lamelle 36b ist in ähnlicher Weise verbaut und in der Figur dargestellt. In einer nicht dargestellten Variante ist es vorstellbar, dass nur eine von diesen mindestens zwei Lamellen 36b eine Zusammenwirkung mit der Wandung aufweist und die jeweils mindestens eine andere Lamelle 36b dann lediglich in einem benachbarten Bereich der Wandung anliegt. Diese und andere nicht gezeigte Anordnungen der verschiedenen Lamellen sind dabei jeweils vor dem gewünschten Zusammenwirken des Gesamtkonzepts zu sehen, wobei eine Veränderung einer Lamelle jeweils eine Auswirkung auf einen resultierenden Luftströmungsverlauf aufweist, so dass entsprechend über eine weitere Veränderung einer weiteren Lamelle dieser Zustand wiederum veränderbar ist. Die Lamellen 36a können im sichtbaren Bereich zumindest teilweise die Funktion eines Dekorelements übernehmen. Mit anderen Worten kann hier die Ausgestaltung des Richtelementes 25 derart erfolgen, so dass eine optische Einpassung in ein gewünschtes Gesamtbild des Innenraums des Kraftfahrzeugs ermöglicht wird. Die Lamellen 36a und 36b sind in der Figur 5a so eingestellt, dass sich ein gewünschter Verlauf des gezeigten Strömungspfeils 12 einstellt. Die Lamellen 36a und 36b können beispielsweise mittels von Scharnieren mit dem Luftausströmelement 24 verbunden sein. Jegliche andere Verbindungsart ist dabei ebenfalls denkbar. Es ist dabei vorstellbar, dass die Lamellen 36a, 36b verschiedenste Stellungen einnehmen können, um einen gewünschten Verlauf des Strömungspfeils 12 zu realisieren. Dabei können die Lamellen 36a, 36b unabhängig voneinander verstellbar sein. In einer anderen Variante ist es auch vorstellbar, dass die Lamellen 36a, 36b zumindest teilweise gekoppelt miteinander bewegbar sind. Mit anderen Worten würde dann eine Auslenkung einer beliebigen Lamelle eine Bewegung einer oder mehrerer anderer Lamellen bewirken. Auch ist es denkbar, dass somit nur mittels eines Vorgangs alle genannten Lamellen in gewünschter Weise ausgerichtet werden können. Insbesondere das Zusammenwirken von jeweils zwei Lamellen und die resultierende Anordnung zueinander kann einen gewünschten Verlauf des Strömungspfeils 12 hervorbringen. Auch ist vorstellbar, dass die Lamellen 36a, 36b jeweils einzeln verstellbar sind und das Zusammenwirken zentral gesteuert wird, so dass sich letztendlich eine resultierende Anordnung einstellt, welche einen gewünschten Verlauf des Strömungspfeils 12 hervorbringt.

Die Figur 5b zeigt als Bestandteile einer Belüftungsvorrichtung 10 das Luftausströmelement 24 mit einem angeordneten Richtelement 25 von Figur 5a in einer Sichtweise von einem Betrachter, welcher in einem Innenbereich eines Kraftfahrzeugs sitzt, in welchem diese Bauelemente der Belüftungsvorrichtung angeordnet sind. Zu erkennen sind die Lamellen 36a im sichtbaren Bereich, welche zumindest teilweise die Funktion eines Dekorelements übernehmen. Ein Dekorelement weist vorzugsweise die Funktion auf, die Belüftungsvorrichtung 10 optisch zu einem sichtbaren Innenbereich des Kraftfahrzeugs zu begrenzen. Zu Erkennen ist zudem ein Teilbereich des Luftausströmelements 24, welches zumindest in diesem Teilbereich ebenfalls die Funktion eines Dekorelements übernimmt. Vorstellbar sind jedoch auch andere, nicht gezeigte Anordnungen des Luftausströmelements 24 mit dem angeordneten Richtelement 25. Zum Beispiel können die Lamellen 36a ebenso vollständig die Funktion des Dekorelements übernehmen.

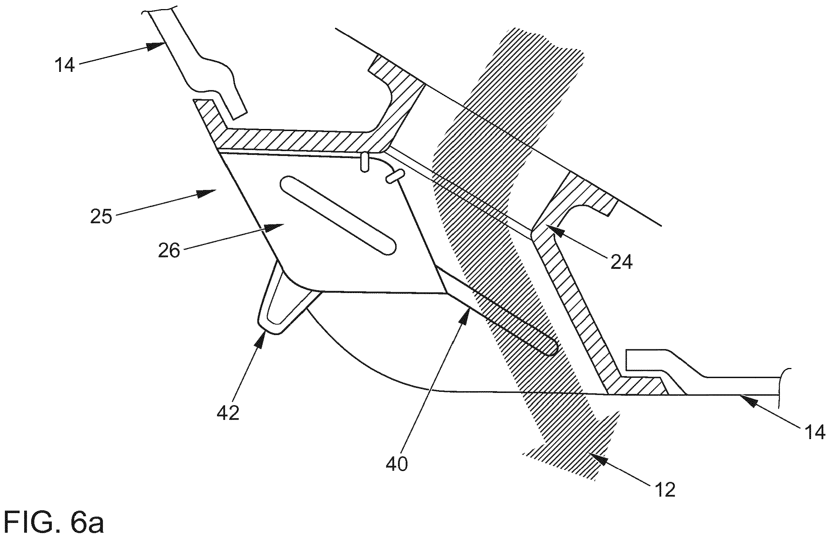

In Figur 6a ist ein weiteres Beispiel eines Richtelements 25 in einem eingebauten Zustand zu erkennen. Dieses Richtelement 25 ist in einem Luftausströmelement 24 angeordnet. Beide Bauteile sind Bestandteile einer Belüftungsvorrichtung 10. Das gezeigte Richtelement 25 ist mittels eines Schiebemechanismus 40 an dem Luftausströmelement 24 angeordnet, so dass sich entweder manuell oder elektrisch verstellbar verschiedene Belüftungszustände einstellen lassen. In der Figur ist der Schiebemechanismus 40 mittig angeordnet und weist einen geraden Verlauf von (bezogen auf die Bildebene) rechts unten nach links oben auf. In einer nicht dargestellten Variante könnte dieser Schiebemechanismus 40 auch einen bogenförmigen Verlauf oder jeglichen andersförmigen Verlauf aufweisen. In dem gezeigten Beispiel der Figur 6a ist die Einstellung derart, so dass sich ein gewünschter Verlauf eines Strömungspfeils 12 einstellt. Das Richtelement 25 umfasst ein Riegelelement 26, welches die im Wesentlichen gezeigte Form einer rautenförmigen Geometrie aufweisen kann. Zudem ist in der Figur der Schiebemechanismus 40 etwa mittig an dem Riegelelement 26 angeordnet. Auch hier sind weitere nicht gezeigte Variationen denkbar. Vorstellbar sind jedoch auch jegliche andere geometrische Formen, welche es erlauben, eine direkte beziehungsweise indirekte Luftströmung zu ermöglichen. Dabei ist jedoch zu beachten, dass die geometrische Form derart gewählt ist, dass sich in einer Anschlagposition, wie sie in dem Ausführungsbeispiel darstellt, das Riegelelement 26 an eine entsprechende Wandung des Luftausströmelements 24 zumindest wesentlich anliegt, so dass an dieser Stelle ein Luftdurchtritt verhindert oder zumindest größtenteils vermieden wird. Mit anderen Worten sind an dieser Stelle die Form des Riegelelements 26 und die Form der Wandung des Luftausströmelements 24, welche in einer jeweiligen Anschlagposition von dem Riegelelement 26 erreicht wird, zumindest teilweise formpassend aufeinander abzustimmen, so dass sich hier im Wesentlichen kein Luftdurchtritt einstellen kann. In der Figur ist dies dadurch gezeigt, dass eine flache Seite des rautenförmigen Körpers des Riegelelements 26 flach an die Wandung des Luftausströmelements 24 anlegt, so dass sich hier im Wesentlichen kein Luftaustritt einstellen kann und der Strömungspfeil 12 wie dargestellt in die gewünschte Richtung lenken lässt. Zu erkennen ist insbesondere, wie das Luftausströmelement 24 und das Richtelement 25 zusammen bewirken, dass sich ein gewünschter Strömungsverlauf eines Luftstroms von innerhalb der Belüftungsvorrichtung 10 in einen nicht gezeigten Innenbereich eines Kraftfahrzeugs einstellt. Dazu sind hier beispielsweise die Geometrien der beiden zuvor genannten Bauteile in vorteilshafter Weise aufeinander abgestimmt. Ferner ist ein Anfasselement 42, welches auch nur als Anfasser bezeichnet werden kann, an dem Richtelement 25 zu erkennen. Dieses Anfasselement 42 kann von einem Benutzer beispielsweise händisch umfasst werden, um daraufhin das Richtelement 25 in eine gewünschte Position zu bewegen, so dass sich ein definierter Belüftungszustand einstellt. Dieser Belüftungszustand kann dann beispielsweise eine direkte beziehungsweise indirekte Luftströmung aufweisen. Es ist aber auch vorstellbar, dass sich das Richtelement 25 mittels einer elektrischen Vorrichtung beispielsweise eines Elektromotors betätigen lässt, wobei eine Bedienung zum Beispiel über eine Klimabedienung einer Klimaanlage eines Kraftfahrzeugs, in dem die Belüftungsvorrichtung 10 eingebaut ist, möglich ist.

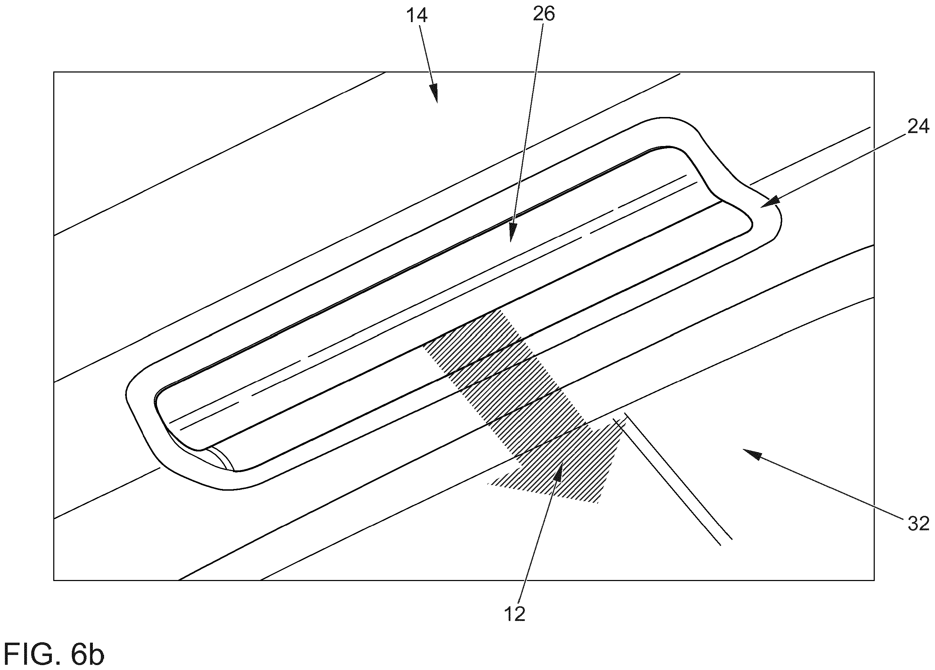

Die Figur 6b zeigt als Bestandteile einer Belüftungsvorrichtung 10 das Luftausströmelement 24 mit einem angeordneten Richtelement 25 von Figur 6a in einer Sichtweise von einem Betrachter, welcher in einem Innenbereich eines Kraftfahrzeugs sitzt, in welchem diese Bauelemente der Belüftungsvorrichtung angeordnet sind. Es ist ein Dachbereich 14 und ein Teil einer Fensterscheibe 32 zu erkennen. Das Richtelement 25 ist in der Figur 6b ohne Anfasselement 42 abgebildet und befindet sich in einer oberen Position, so dass ein Strömungspfeil 12 in Richtung der Fensterscheibe 32 zeigt. Es ist somit ein direkter Belüftungszustand auf die Scheibe eingestellt.

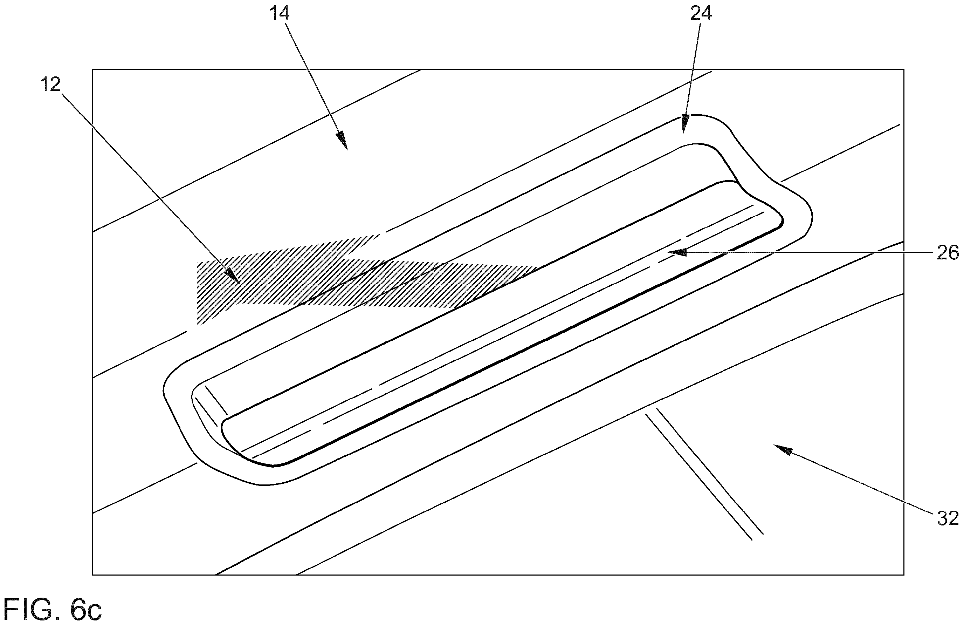

Die Figur 6c zeigt als Bestandteile einer Belüftungsvorrichtung 10 das Luftausströmelement 24 mit einem angeordneten Richtelement 25 von Figur 6a in einer Sichtweise von einem Betrachter, welcher in einem Innenbereich eines Kraftfahrzeugs sitzt, in welchem diese Bauelemente der Belüftungsvorrichtung 10 angeordnet sind. Es ist ein Dachbereich 14 und ein Teil einer Fensterscheibe 32 zu erkennen. Das Richtelement 25 ist in der Figur 6c ohne Anfasselement 42 abgebildet und befindet sich in einer unteren Position, so dass ein Strömungspfeil 12 in Richtung des Dachbereichs 14 zeigt. Es ist somit ein indirekter Belüftungszustand eingestellt.

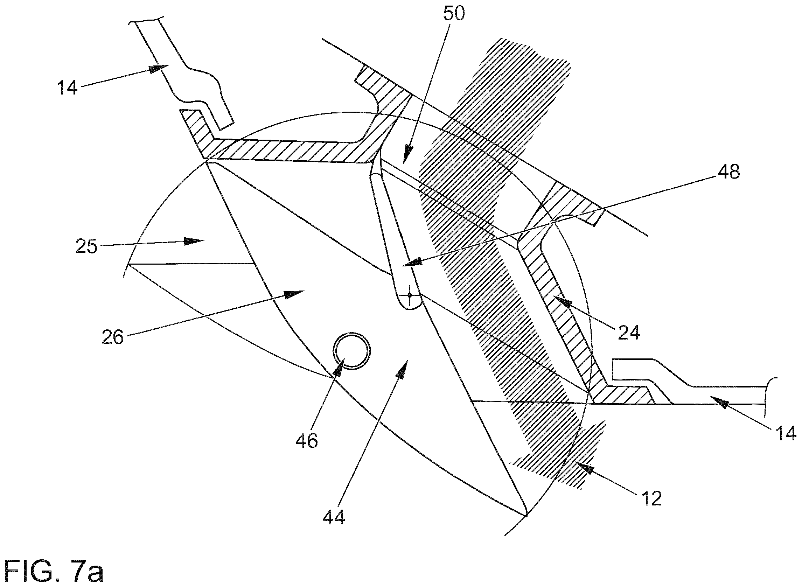

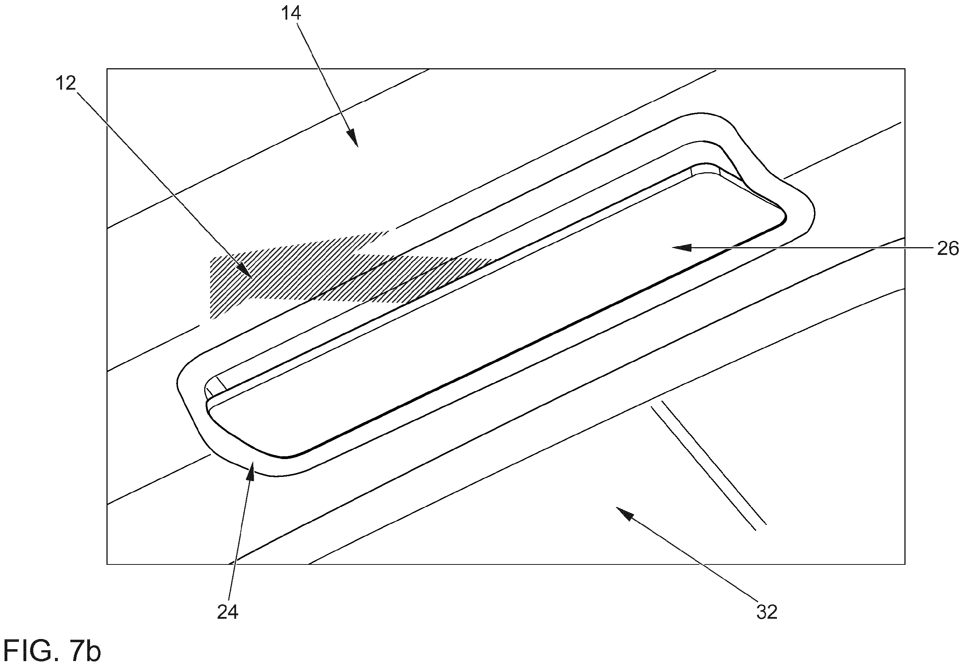

In Figur 7a ist ein weiteres Beispiel eines Richtelements 25 in einem eingebauten Zustand zu erkennen. Dieses Richtelement 25 ist in einem Luftausströmelement 24 angeordnet. Beide Bauteile sind Bestandteile einer Belüftungsvorrichtung 10. Das gezeigte Richtelement 25 ist mittels eines Klappmechanismus 44 an dem Luftausströmelement 24 angeordnet, so dass sich entweder manuell oder elektrisch verstellbar verschiedene Belüftungszustände einstellen lassen. In dem gezeigten Beispiel der Figur 7a ist die Einstellung derart, so dass sich ein gewünschter Verlauf eines Strömungspfeils 12 einstellt. Das Richtelement 25 umfasst ein Riegelelement 26, welches in der Figur im Wesentlichen die gezeigte Form einer Raute beziehungsweise eines rautenförmigen Körpers beziehungsweise Form aufweisen kann. Diese rautenförmige Form ist in der dargestellten Weise insbesondere im Sichtbereich mittels eines kurvenförmigen Verlaufs einer nach außen hin sichtbaren Front abgewandelt. Mit anderen Worten ist das rautenförmige Riegelelement 26 im sichtbaren Bereich nach außen durch eine Fläche (in der Figur durch eine Linie skizziert) begrenzt, welche sich in den Innenbereich eines nicht weiter dargestellten Kraftfahrzeugs vorwölbt. Dieser konvexe Verlauf kann sich entsprechend an die unmittelbare Umgebung des Innenbereichs des Kraftfahrzeugs derart angepasst darstellen, so dass sich ein fließender Übergang von der unmittelbaren Umgebung zu dem Riegelelement 26 einstellt. In der gezeigten Figur ist dies (bezogen auf die Bildebene) im linken oberen Bereich angedeutet, indem die bogenförmige Linie im Wesentlichen als Verlängerung einer Außenlinie von dem links oben gezeigten Dachbereich 14 darstellt. Mit anderen Worten ist das Riegelelement 26 derartig im sichtbaren Bereich ausgeformt, so dass sich ein im Wesentlichen ebener Übergang von dem Dachbereich 14 zu einer Außenfläche des Riegelelements 26 einstellt. Vorstellbar sind jedoch auch jegliche andere geometrische Formen des Riegelelements 26, welche es erlauben, eine direkte beziehungsweise indirekte Luftströmung zu ermöglichen. Die zuvor genannten Merkmale können sich auch bei einer anderen Formgebung oder einer nur leicht veränderten Formgebung einstellen beziehungsweise berücksichtigt werden. Insbesondere das Zusammenspiel zwischen dem Verlauf des Dachbereichs 14 und einer Außenfläche des Riegelelements 26 kann dabei berücksichtigt werden. Zu erkennen ist insbesondere, wie das Luftausströmelement 24 und das Richtelement 25 zusammen bewirken, dass sich ein gewünschter Strömungsverlauf eines Luftstroms von innerhalb der Belüftungsvorrichtung 10 in einen nicht gezeigten Innenbereich eines Kraftfahrzeugs einstellt. Dazu sind hier beispielsweise die Geometrien der beiden zuvor genannten Bauteile in vorteilshafter Weise aufeinander abgestimmt. Der Klappmechanismus 44 umfasst in diesem Beispiel sowohl ein Scharnier 46, welches mittig an dem Richtelement 25 angeordnet ist, als auch ein innenliegendes Aufstellelement 48, welches auf einem Schienenelement 50 in dem Luftausströmelement 24 angeordnet ist. In der Figur ist zudem lediglich für den Klappmechanismus 44 eine mögliche weitere Stellung gezeigt. Zwischen der aktuellen dargestellten Stellung und der weiteren Stellung kann jegliche weitere Zwischenposition eingenommen werden. Das Aufstellelement 48 kann dann ebenfalls eine andere Stellung einnehmen, wobei diese Stellung nicht gezeigt wird. Dabei kann das Zusammenwirken zwischen dem Klappmechanismus 44 und dem Aufstellelement 48 jegliche Anordnung einnehmen, welche gemäß den mechanischen Eigenschaften der eingebauten Anordnung ermöglicht wird, so dass sich wiederum ein gewünschter Verlauf des Strömungspfeils 12 einstellt. Auch hier ist eine nicht weiter dargestellte Kopplung denkbar. Jegliche Art von Kopplungselementen oder auch nur ein Kopplungselement ist dabei vorstellbar. Auch ist wiederum eine individuell steuerbare Anordnung mit einer voneinander unabhängigen Bewegungsart denkbar, wobei dann die spezifische Anordnung zentral gesteuert wird, so dass sich wiederum ein gewünschter Verlauf des Strömungspfeils 12 einstellt beziehungsweise einstellen lässt. Je nach Intensität der angelegten Strömung und insbesondere durch das Zusammenwirken von dem Klappmechanismus 44 und dem Aufstellelement 48 lassen sich somit stufenlos verschiedenste Lüftungskonzepte einstellen, so dass eine besonders flexible und einfach zu bedienende Anordnung bereitgestellt werden kann. Die Figur 7b zeigt als Bestandteile einer Belüftungsvorrichtung 10 das Luftausströmelement 24 mit einem angeordneten Richtelement 25 von Figur 7a in einer Sichtweise von einem Betrachter, welcher in einem Innenbereich eines Kraftfahrzeugs sitzt, in welchem diese Bauelemente der Belüftungsvorrichtung 10 angeordnet sind. Es ist ein Dachbereich 14 und ein Teil einer Fensterscheibe 32 zu erkennen. Das Richtelement 25 ist in der Figur 7b ohne Anfasselement 42 abgebildet und befindet sich in einer unteren Position, so dass ein Strömungspfeil 12 in Richtung des Dachbereichs 14 zeigt. Es ist somit ein indirekter Belüftungszustand eingestellt.

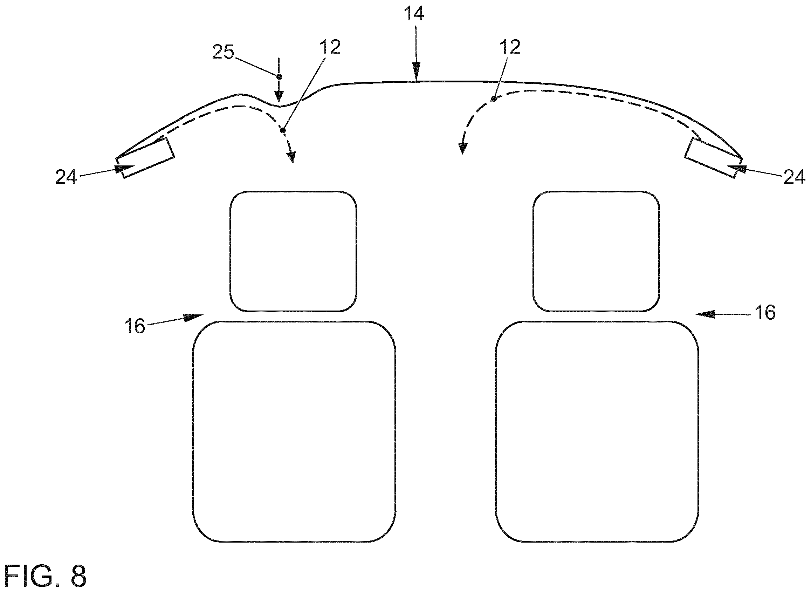

Die Figur 8 zeigt eine schematische Draufsicht auf eine erfindungsgemäße Belüftungsvorrichtung 10. Zu erkennen sind zwei schematisch dargestellte Luftausströmelemente 24 aus welchen Luft ausströmt, wobei der Strömungsweg in diesem Ausführungsbeispiel mittels gestrichelter Strömungspfeile 12 dargestellt ist. Diese Luftausströmelemente 24 können auch als statische Ausströmer bezeichnet werden. Ferner ist schematisch ein Dachbereich 14 dargestellt. Dieser Dachbereich 14 wölbt sich bezogen auf die Bildebene oberhalb von zwei ebenfalls schematisch dargestellten Sitzelementen 16. Wiederum bezogen auf die Bildebene ist auf der linken Seite oberhalb des Sitzelements 16 schematisch ein Richtelement 25 dargestellt, welches in dieser Figur 8 als nach unten weisender Pfeil dargestellt ist. Dieses Richtelement 25 befindet sich in einem ausgefahrenen Zustand, so dass sich der unmittelbar darunter befindliche Teilbereich des Dachbereichs 14 nach unten wölbt. Mit anderen Worten bedingt die Aufstellung des Richtelements 25, welches in diesem Fall auch als Aktuator bezeichnet werden kann, dass sich eine Formveränderung von einem Dachhimmel über diesem, auf der linken Seite befindlichen, Sitzelement 16 einstellt, um so eine gezielte Beeinflussung der Luftströmung mittels des Richtelements 25 beziehungsweise des Aktuators zu ermöglichen. In einer nicht dargestellten Alternative ist es auch vorstellbar, dass sich das Richtelement 25 aus dem Dachbereich 14 herausklappen lässt, um somit einen gewünschten Belüftungszustand herbeizuführen. In beiden Fällen resultiert ein direkter Belüftungszustand, welcher auch als direkte Anströmung bezeichnet werden kann. Durch das Ausstellen eines oder mehrerer solcher Richtelemente 25 hinter der Luftaustrittsfläche lässt sich also ein direkter Belüftungszustand ermöglichen. Gegenüberliegend auf der rechten Seite bezogen auf die Bildebene ist kein Richtelement 25 gezeigt, da dieses sich in einem nicht aktivierten Zustand befindet. Somit stellt sich ein indirekter Strömungsverlauf der aus dem Luftausströmelement 24 ausströmenden Luft ein, so dass ein Innenbereich des Kraftfahrzeugs, welcher auch als Kabine bezeichnet werden kann, mit einer indirekten Belüftung ermöglicht wird. Diese indirekte Belüftung hat also zur Folge, dass sich die ausströmende Luft entlang des Dachhimmels ausbreitet, da der Dachhimmel also nunmehr glatt und ohne Strömungshindernisse ist. Dabei kann auch in diesem Beispiel entweder eine manuelle Einstellbarkeit oder eine elektrische Betätigung, etwa über die Klimabedienung, vorgesehen sein. Da sich die Luftausströmelemente 24 gegenüberliegen, kann sich auch eine Richtbarkeit der Belüftungsvorrichtung 10 einstellen, welche sich wechselseitig beziehungsweise durch eine alternierende Luftströmung auszeichnet. Mit anderen Worten kann sich eine wechselseitige, alternierende Luftströmung links und rechts im Kraftfahrzeug einstellen beziehungsweise erzielt werden, welche an Luftströmungen in einer natürlichen Umgebung erinnert. Die Luftausströmelemente 24 der linken und rechten Seite können beispielsweise aufeinander gerichtet sein, so dass es durch die beiden konkurrierenden Luftströme zu Verwirbelungen der Luft, sogenannten Luftwalzen, in der Fahrzeugmitte kommen kann, wobei diese von einem Fahrgast oder allgemein von einem Insassen als angenehm wahrgenommen werden kann, da deren Richtung nicht zuordenbar ist und die Geschwindigkeit nicht konstant ist.

### Bezugszeichenliste

- 10: Belüftungsvorrichtung
- 12: Strömungspfeile
- 14: Dachbereich
- 16: Sitzelement
- 18: Luftkanalelement
- 20: Luftkanal
- 20a: Luftkanal
- 20b: Luftkanal
- 22: Luftausströmungspunkt
- 24: Luftausströmelement
- 25: Richtelement
- 26: Riegelelement
- 27: Außenbereich
- 28: Blende
- 30: Lichtelement
- 32: Fensterscheibe
- 34: Kopfstützbereich
- 36a: Lamellen im sichtbaren Bereich
- 36b: Lamellen im nicht sichtbaren Bereich

- 40: Schiebemechanismus
- 42: Anfasselement
- 44: Klappmechanismus
- 46: Scharnier
- 48: Aufstellelement
- 50: Schienenelement

## Patentansprüche

1. Belüftungsvorrichtung (10) für einen Innenbereich eines Kraftfahrzeugs, insbesondere in einem Bereich einer zweiten Sitzreihe, umfassend wenigstens ein Luftkanalelement (18), wenigstens eine mit einem ersten Ende des wenigstens einen Luftkanalelements (18) gekoppelte Versorgungsvorrichtung als Teil einer Klimaanlage des Kraftfahrzeugs, wenigstens ein Luftausströmelement (24), welches an einem zweiten Ende des wenigstens einen Luftkanalelements (18) gekoppelt ist und ausgelegt ist, im nicht sichtbaren Bereich des Innenbereichs des Kraftfahrzeugs angeordnet zu werden , wenigstens ein Richtelement (25) und wenigstens ein Lichtelement (30), wobei die Anordnungen des wenigstens einen Richtelements (25) und des wenigstens einen Luftausströmelements (24) ausgelegt sind, zusammen zu bewirken, dass die Belüftungsvorrichtung (10) zumindest zwischen zwei Belüftungszuständen in dem Innenbereich des Kraftfahrzeugs stufenlos einstellbar ist, welche sich zumindest jeweils durch eine direkt in den Innenraum des Kraftfahrzeugs gerichtete und eine indirekt entlang eines für diese Zwecke ausgebildetem Dachhimmels gerichtete Richtung von ausströmender Luft bezogen auf einen Sitzbereich des Kraftfahrzeugs unterscheiden, **dadurch gekennzeichnet, dass** das wenigstens eine Richtelement (25) ausgelegt ist, in einem nicht sichtbaren Dachbereich (14) des Innenraums des Kraftfahrzeugs angeordnet zu werden, wobei das wenigstens eine Richtelement (25) ausgelegt ist, bei einer Aktivierung des wenigstens einen Richtelements (25) eine Formveränderung des benachbarten sichtbaren Dachbereichs (14) zu bewirken, so dass eine Richtung von ausströmender Luft aus dem wenigstens einen Luftströmelement (24) von einem Belüftungszustand zu einem weiteren Belüftungszustand einstellbar ist.

2. Belüftungsvorrichtung (10) nach Anspruch 1, **dadurch gekennzeichnet, dass** in Abhängigkeit der zumindest zwei Belüftungszuständen eine Lichtinszenierung mittels des wenigstens einen Lichtelements (30) einstellbar ist.

3. Belüftungsvorrichtung nach Anspruch 1 oder Anspruch 2, **dadurch gekennzeichnet, dass** das wenigstens eine Luftkanalelement (18) und das wenigstens eine Luftausströmelement (24) und das wenigstens eine Richtelement (25) ausgelegt sind, in einem Dachbereich (14) eines Innenbereichs des Kraftfahrzeugs
angeordnet zu werden.

4. Belüftungsvorrichtung (10) nach einem der vorherigen Ansprüche, **dadurch gekennzeichnet, dass** das wenigstens eine Richtelement (25) manuell oder elektrisch verstellbar ist, wobei im Falle einer elektrischen Verstellbarkeit die Belüftungsvorrichtung (10) mit einer programmierbaren Klimaanlage derart gekoppelt ist, sodass die zumindest zwei Belüftungszustände und die Lichtinszenierung in Abhängigkeit eines aktivierten Programmes der Klimaanlage einstellbar sind.

5. Belüftungsvorrichtung (10) nach einem der vorherigen Ansprüche, **dadurch gekennzeichnet, dass** die Versorgungsvorrichtung in Form eines Front/- Mittelkonsolen-Klimageräts oder in Form eines Heck-Klimageräts mit dem wenigstens einen Luftkanalelement (18) gekoppelt ist.

## Claims

1. Ventilation device (10) for an inner region of a motor vehicle, in particular in a region of a second row of seats, comprising at least one air duct element (18), at least one supply device as part of an air conditioning system of the motor vehicle, which device is coupled to a first end of the at least one air duct element (18), at least one air outflow element (24) which is coupled to a second end of the at least one air duct element (18) and is designed to be arranged in the non-visible region of the inner region of the motor vehicle, at least one directional element (25) and at least one light element (30), the arrangements of the at least one directional element (25) and of the at least one air outflow element (24) being designed to together cause the ventilation device (10) to be continuously adjustable at least between two ventilation states in the inner region of the motor vehicle, which differ with respect to a seat region of the motor vehicle at least in each case by a direction of outflowing air aimed directly into the passenger compartment of the motor vehicle and a direction aimed indirectly along a roof liner designed for this purpose, **characterized in that** the at least one directional element (25) is designed to be arranged in a non-visible roof region (14) of the passenger compartment of the motor vehicle, the at least one directional element (25) being designed to effect a change in shape of the adjacent visible roof region (14) when the at least one directional element (25) is activated, so that a direction of outflowing air from the at least one air flow element (24) can be adjusted from a ventilation state to an additional ventilation state.

2. Ventilation device (10) according to claim 1, **characterized in that** on the basis of the at least two ventilation states, a light display can be adjusted by means of the at least one light element (30).

3. Ventilation device according to either claim 1 or claim 2,
**characterized in that** the at least one air duct element (18) and the at least one air outflow element (24) and the at least one directional element (25) are designed to be arranged in a roof region (14) of an inner region of the motor vehicle.

4. Ventilation device (10) according to any of the preceding claims,
**characterized in that** the at least one directional element (25) is manually or electrically adjustable, in the case of electrical adjustability, the ventilation device (10) being coupled to a programmable air conditioning system in such a way that the at least two ventilation states and the light display can be adjusted on the basis of an activated program of the air conditioning system.

5. Ventilation device (10) according to any of the preceding claims,
**characterized in that** the supply device in the form of a front/central console air conditioning unit or in the form of a rear air conditioning unit is coupled to the at least one air duct element (18).

## Revendications

1. Dispositif de ventilation (10) pour une zone intérieure d'un véhicule automobile, en particulier dans une zone d'une seconde rangée de sièges, comprenant au moins un élément formant conduit d'air (18), au moins un dispositif d'alimentation accouplé à une première extrémité de l'au moins un élément formant conduit d'air (18) et faisant partie d'un système de climatisation du véhicule automobile, au moins un élément de sortie d'air (24) accouplé à une seconde extrémité de l'au moins un élément formant conduit d'air (18) et conçu pour être disposé dans la zone non visible de la zone intérieure du véhicule automobile, au moins un élément de direction (25) et au moins un élément lumineux (30), dans lequel les dispositions de l'au moins un élément de direction (25) et de l'au moins un élément de sortie d'air (24) sont conçues pour amener conjointement le dispositif de ventilation (10) à pouvoir être réglé en continu entre au moins deux états de ventilation dans la zone intérieure du véhicule automobile, lesquels états de ventilation diffèrent au moins respectivement par une direction d'air sortant dirigée directement dans l'habitacle du véhicule automobile et une direction d'air sortant dirigée indirectement le long d'un ciel de toit réalisé à cet effet, par rapport à une zone de sièges du véhicule automobile, **caractérisé en ce que** l'au moins un élément de direction (25) est conçu pour être disposé dans une zone de toit (14) non visible de l'habitacle du véhicule automobile, dans lequel l'au moins un élément de direction (25) est conçu pour amener un changement de forme de la zone de toit (14) visible adjacente lors de l'activation de l'au moins un élément de direction (25), de sorte qu'une direction de l'air sortant de l'au moins un élément de sortie d'air (24) peut être réglée d'un état de ventilation à un autre état de ventilation.

2. Dispositif de ventilation (10) selon la revendication 1, **caractérisé en ce que,** en fonction des au moins deux états de ventilation, une mise en scène lumineuse peut être réglée au moyen de l'au moins un élément lumineux (30).

3. Dispositif de ventilation selon la revendication 1 ou la revendication 2, **caractérisé en ce que** l'au moins un élément formant conduit d'air (18) et l'au moins un élément de sortie d'air (24) et l'au moins un élément de direction (25) sont conçus pour être disposés dans une zone de toit (14) d'une zone intérieure du véhicule automobile.

4. Dispositif de ventilation (10) selon l'une des revendications précédentes, **caractérisé en ce que** l'au moins un élément de direction (25) peut être réglé manuellement ou électriquement, dans lequel, dans le cas d'un réglage électrique, le dispositif de ventilation (10) est couplé à un système de climatisation programmable, de telle sorte que les au moins deux états de ventilation et la mise en scène lumineuse peuvent être réglés en fonction d'un programme activé du système de climatisation.

5. Dispositif de ventilation (10) selon l'une des revendications précédentes, **caractérisé en ce que** le dispositif d'alimentation est accouplé sous forme d'un climatiseur avant/au centre de la console ou sous forme d'un climatiseur arrière à l'au moins un élément formant conduit d'air (18).
